# Europäisches Patentamt
# European Patent Office
# Office européen des brevets

(19)

(11) Veröffentlichungsnummer: **0 121 203**
**B1**

(12) ## EUROPÄISCHE PATENTSCHRIFT

(45) Veröffentlichungstag der Patentschrift:
19.03.86

(51) Int. Cl.⁴: **H 04 Q 11/04**

(21) Anmeldenummer: 84103287.3

(22) Anmeldetag: 24.03.84

(54) Verfahren zum Steuern des Verbindungsaufbaus und -abbaus in einer zeitmultiplexen Fernmeldevermittlungsanlage, insbesondere in einer Fernsprechvermittlungsanlage.

(30) Priorität: 02.04.83 DE 3312161

(43) Veröffentlichungstag der Anmeldung:
10.10.84 Patentblatt 84/41

(45) Bekanntmachung des Hinweises auf die Patenterteilung:
19.03.86 Patentblatt 86/12

(84) Benannte Vertragsstaaten:
AT FR IT NL

(56) Entgegenhaltungen:
DE - A - 2 906 221
FR - A - 2 160 224
FR - A - 2 423 943

INFORMATIONEN
FERNSPRECH-VERMITTLUNGSTECHNIK, Band 2, Nr. 4, November 1966, Seiten 194-199, München, DE; W. POSCHENRIEDER: "Stand der Zeitmultiplex-Vermittlungstechnik (II) Steuerungsverfahren"
NACHRICHTENTECHNIK ELEKTRONIK, Band 31, Nr. 5, 1981, Seiten 203-207, Berlin, DE; U. METZ: "Mikrorechnergesteuertes Labormodell zur Durchschaltung von PCM-Signalen"
IEEE INTERNATIONAL SWITCHING SYMPOSIUM RECORD, 6.-9. Juni 1972, Seiten 476-483, New York, USA; M.J. KELLY: "A centralized time switching junctor for the D2 line format"

(73) Patentinhaber: Telefonbau und Normalzeit GmbH, Mainzer Landstrasse 128-146 Postfach 4432, D-6000 Frankfurt (Main) (DE)

(72) Erfinder: Kretz, Hans-Joachim, Mainzer Landstrasse 501D, D-6000 Frankfurt/Main (DE)
Erfinder: Wehrhan, Klaus-Dieter, Dreieichstrasse 36D, D-6053 Obertshausen (DE)
Erfinder: Bock, Hans-Jürgen, Gutenbergstrasse 21D, D-6100 Darmstadt (DE)

(74) Vertreter: Portwich, Peter, Mainzer Landstrasse 128-146, D-6000 Frankfurt/Main (DE)

## Beschreibung

Die Erfindung betrifft ein Verfahren zum Steuern des Verbindungsaufbaus und -abbaus in einer zeitmultiplexen-Fernmeldevermittlungsanlage, insbesondere in einer Fernsprechvermittlungsanlage mit einer Steuereinrichtung welche die Einstellinformationen für die Zeilen und Spalten eines räumlich durchschaltenden, aus bistabilen, matrixförmig angeordneten Koppelpunkten bestehenden Koppelfeldes erzeugt, an dessen Zeilen an-schlußindividuelle und an dessen Spalten verbindungsindividuelle Einrichtungen angeschlossen sind, wobei das Zeitmutliplexkoppelfeld aus einer oder mehreren Sammelschienen oder Sprachspeicher gebildet, über welche die Verbindungen während der einzelnen Zeitschlitze, durch einen Haltespeicher gesteuert, gescheltet werden.

Ein Koppelfeld, welches aus bistabilen Koppelpunkten matrixförmig aufgebaut ist, erhält seine Einstellinformationen von einer Steuereinrichtung oder einem Markierer dadurch, daß mit Hilfe der Zeilen- und der Spaltenadresse ein bestimmter Koppelpunkt angesteuert und entweder geschlossen oder geöffnet wird. Diese Vorgänge treten beim Auf- bzw. Abbau einer Verbindung jeweils auf. Bei einem Koppelfeld mit zeitmultiplexer Durchschaltung ist dagegen in der Regel eine oder auch mehrere Sammelschienen vorhanden, über welche innerhalb eines Zeitschlitzes zwei Anschlüsse miteinander verbunden werden. Die Steuerung der betreffenden elektronischen Schalter erfolgt dabei mit Hilfe eines Haltespeichers. Eine derartige Einrichtung wird auch als Raumstufe bezeichnet. Eine andere Art der Verbindungsdurchschaltung bei zeitmultiplexen Fernmeldevermittlungsanlagen besteht darin, daß die während bestimmter Zeitschlitze eintreffenden Informationen in einem sogenannten Sprachspeicher zwischengespeichert und während eines anderen Zeitschlitzes an die empfangende Stelle weitergegeben werden. Eine derartige, sogenannte zeitlagenumsetzende Einrichtung, wird auch als Zeitstufe bezeichnet. Auch in diesem Fall wird ein sogenannter Haltespeicher benötigt, welcher die notwendigen Informationen zur Zeitlagenumsetzung liefert.

Bereits bei dieser kurzen Betrachtung wird deutlich, daß sich die Einstellinformationen für ein matrixförmiges, aus bistabilen Koppelpunkten gebildetes Koppelfeld von denjenigen für ein zeitmultiplexes Koppelfeld stark unterscheiden. Es ist demnach nicht möglich, ohne weiteres mit einer Steuereinrichtung, welche die Einstellinformationen für ein aus bistabilen Koppelpunkten gebildeten Koppelfeldes erzeugt ein zeitmultiplexes Koppelfeld zu steuern.

Die Verlagerung der Intelligenz aus der Peripherie (hardware) in die Steuereinrichtung (software) hat zur Folge, daß die Programmierung der Steuereinrichtung aufwendiger wird und somit ein Großteil der Entwicklungsarbeit an einer Fernmeldevermittlungsanlage auf die Erstellung der Programme für die Steuereinrichtung entfällt.

Die Aufgabe der Erfindung besteht nun darin, ein Verfahren enzugeben, welches die Steuerung eines zeitmultiplexen Koppelfeldes mit den Einstellinformationen eus einer Steuereinrichtung ermöglicht, welche zur Steuerung eines räumlich durchschaltenden, aus bistabilen, matrixförmig angeordneten Koppelpunkten bestehenden Koppelfeldes dient, an dessen Zeilen anschlußindividuelle, und an dessen Spalten verbindungsindividuelle Einrichtungen engeschlossen sind. Diese Aufgabe wird dadurch gelöst, daß durch eine zwischen die Steuereinrichtung und den Haltespeicher geschaltete Anpassungseinrichtung eine entsprechende Umwandlung der von der Steuereinrichtung erzeugten Einstellinformationen erfolgt, indem die Spalteninformationen (Adressen) in einen ersten Speicher mit zeilenindividuellen Speicherplätzen und die Zeileninformationen (Adressen) in einen zweiten Speicher mit spaltenindividuellen Speicherplätzen derart eingetragen werden, daß in dem jeweiligen Speicher in den betreffenden Speicherplätzen die zu einer Verbindung gehörenden Informationen enthalten sind, daß sämtliche zu einer Verbindung gehörenden Zeileninformationen aus den Speichern aufgrund eines von der Steuereinrichtung erzeugten Signals, welches den Ablauf eines Vermittlungsvorgangs kennzeichnet, ermittelt und in einem Speicherbereich eines dritten Speichers zusammen eingetragen werden, dessen Inhalt zur Aktualisierung des Speicherinhalts des Haltespeichers dient.

Durch die Verwendung eines ersten Speichers mit zeilenindividuellen Speicherplätzen zur Eintragung der Spalteninformation und eines zweiten Speichers mit spaltenindividuellen Speicherplätzen zur Eintragung der Zeileninformation lassen sich leichter die an einer Verbindung beteiligten Anschlüsse und Leitungen ermitteln, besonders dann, wenn mehr als zwei Anschlüsse oder Leitungen an einer Verbindung beteiligt sind, (beispielsweise Konferenzschaltung, Aufschaltung, usw.).

Eine Weiterbildung der Erfindung besteht auch darin, daß bei Vorhandensein von mehr als zwei Informationen in einem Speicherbereich des dritten Speichers, beispielsweise bei Konferenzverbindungen, von der Anpassungseinrichtung eine freie digitale Mischeinrichtung ermittelt und deren Adresse in den betreffenden Speicherbereich eingetragen wird.

Während es bei einem matrixförmigen, räumlich durchschaltenden Koppelfeld möglich ist, eine Vielzahl von Zeilen und Spalten zusammenzuschalten, ist dies bei zeitmultiplexen Koppelfeldern aus technologischen Gründen nicht möglich. Für diesen Fall muß eine Mischeinrichtung bereitgestellt werden, die bei einem räumlichen Koppelfeld nicht unbedingt notwendig ist und deren Existenz in dem Programm der Steuereinrichtung nicht berücksichtigt ist. Da die Steuereinrichtung jedoch in möglichst unveränderter Form beibehalten werden soll, müssen diese zusätzlichen Funktionen im Rehmen der Bereitstellung einer Mischeinrichtung von der Anpassungseinrichtung übernommen werden.

Weitere Vorteile ergeben sich aus den Unteransprüchen.

Die Erfindung wird anhand eines Ausführungsbeispiels näher erläutert, welches in der Zeichnung dargestellt ist. Es zeigt:

Fig. 1 das Blockschaltbild einer Fernsprechvermittlungsanlage,

Fig. 2 die Aufteilung der Speicherbereiche der drei Speicher (SP1 bis SP3) und

Fig. 3 a und 3b den Inhalt des dritten Speichers anhand unterschiedlicher Verbindungskonfigurationen.

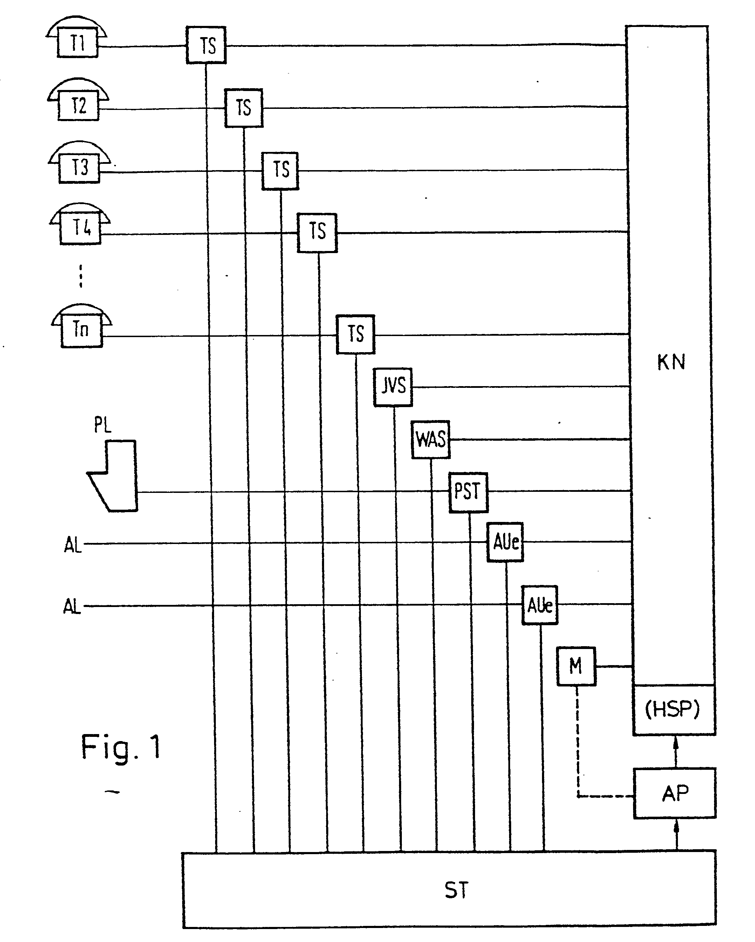

Bei dem in Fig. 1 gezeigten Blockschaltbild kann es sich sowohl um eine Fernsprechvermittlungsanlage mit einem Koppelnetz KN mit räumlicher oder auch mit zeitmultiplexer Durchschaltung handeln. Bei der erstgenannten Art der Verbindungsdurchschaltung wird der zum Koppelnetz KN gehörige Haltespeicher HSP nicht benötigt. Ebenso die Anpassungsschaltung AP.

Eine Fernsprechvermittlungsanlage besteht in der Regel aus Teilnehmeranschlußschaltungen TS zum Anschluß von Teilnehmerstationen T, Innenverbindungssätzen IVS, Wahlaufnahmesätzen WAS, Platzsteuerungen PST zum Anschluß von Vermittlungsplätzen PL, Leitungsschaltungen AUe zum An-schluß von Verbindungsleitungen AL und evtl. aus Mischeinrichtungen M zum Aufbau von Konferenzschaltungen. Die genannten Einrichtungen sind an einem Koppelnetz KN angeschlossen, welches aufgrund der von den peripheren Einrichtungen eintreffenden Informationen durch die Steuereinrichtung ST gesteuert wird. Es ist selbstverständlich, daß von den genannten peripheren Einrichtungen eine Vielzahl vorhanden ist, obwohl das Blockschaltbild nur wenige zeigt. Nähere Einzelheiten über den Aufbau und die Wirkungsweise einer Fernsprechvermittlungsanlage am Beispiel einer Fernsprechnebenstellenanlage läßt sich der Druckschrift TN-Nachrichten (1978) Heft 79 auf den Seiten 3 bis 26 entnehmen. Bei dieser Fernsprechvermittlungsanlage handelt es sich um eine solche mit einem räumlich durchschaltenden, aus bistabilen, matrixförmig angeordneten Koppelpunkten gebildeten Koppelfeld. Bei diesem sind an den Zeilen anschlußindividuelle Einrichtungen wie z.B. Teilnehmeran-schlußschaltungen TS, Wahlaufnahmesätze WAS, Platzsteuerungen PST, nicht gezeigte Querverbindungsleitungen und an den Spalten Innenverbindungssätze IVS, Leitungs schaltungen AUE und nicht gezeigte Tonsender angeschlossen.

Die äußeren Anreize aus der Peripherie, die zu einem Verbindungsauf- bzw. Abbau innerhalb des Koppelnetzes KN führen, sind die gleichen unabhängig von der Art der Verbindungsdurchschaltung innerhalb des Koppelnetzes KN. Im folgenden wird kurz ein Verbindungsauf, und Abbau zur Erläuterung der Funktionen der Steuereinrichtungen ST erläutert.

Das Aushängen des Handapparates an einer Teilnehmerstation T wird von der dazugehörigen Teilnehmerschaltung TS erkannt und an die Steuereinrichtung ST gemeldet, zusammen mit der Identität des betreffenden Anschlusses. Die Steuereinrichtung ST kennzeichnet in ihrem Arbeitsspeicher den betreffenden Teilnehmeranschluß als besetzt und ermittelt einen freien Innenverbindungssatz IVS, welcher ebenfalls in dem Arbeitsspeicher besetzt gekennzeichnet wird. Weiterhin wird ein freier Wahlaufnahmesatz WAS gesucht, der ebenfalls eine Belegtmarkierung im Arbeitsspeicher erhält. Die Steuereinrichtung ST sendet nun die Spaltenadresse des betreffenden Verbindungssatzes IVS und die entsprechenden Zeilenadressen des Teilnehmeranschlusses und des Wahlaufnahmesatzes WAS an das Koppelnetz KN. Mit Hilfe dieser Adressen werden in der Spalte des Verbindungssatzes IVS der Koppelpunkt des Teilnehmeranschlusses und der Koppelpunkt des Wahlaufnahmesatzes WAS geschlossen, worauf die Teilnehmerstation T mit dem Wahlaufnahmesatz WAS verbunden ist. Zum Zeichen, daß der Teilnehmer mit der Wahl beginnen kann, erhält er den Wählton aus dem Wahlaufnahmesatz WAS oder aus dem Verbindungssatz IVS. Die von der Teilnehmerstation ausgesendeten Wahlkennzeichen werden über das Koppelnetz KN dem Wahlaufnahmesatz WAS zugeführt, welcher diese empfängt und die einzelnen Ziffernwerte der gewählten Rufnummer an die Steuereinrichtung ST weitergibt, wo die Wahlinformation ausgewertet wird. Handelt es sich bei der gewünschten Verbindung um eine Externverbindung, d.h. um eine Verbindung mit einer Verbindungsleitung AL, so ermittelt die Steuereinrichtung ST eine freie Leitungsschaltung AUe und veranlaßt die Verbindung derselben mit dem betreffenden Teilnehmeranschluß, indem dem Koppelnetz KN als Spaltenadresse die Adresse der betreffenden Leitungsschaltung AUe und als Zeileninformation die Zeilenadresse des betreffenden Teilnehmeranschlusses übermittelt wird. Mit Hilfe dieser Informationen erfolgt die Einstellung des Koppelpunktes. Nach Beendigung der Wahl erhält das Koppelnetz KN die Spaltenadresse des Verbindungssatzes IVS und die Zeilenadressen des betreffenden Teilnehmeranschlusses und des Wahlaufnahmesatzes WAS zusammen mit dem Befehl, die Koppelpunkte zu öffnen.

Wird aufgrund der vom Wahlaufnahmesatz WAS empfangenen Information ein Teilnehmer der betreffenden Vermittlungsstelle gewünscht, so erhält nach Auswertung der Wahlinformation das Koppelnetz KN von der Steuereinrichtung ST die Spaltenadresse des betreffenden Verbindungssatzes IVS und die Zeilenadresse des gewünschten Teilnehmeranschlusses zusammen mit dem Befehl, den Koppelpunkt zu schließen. Zuvor hatte bereits das Koppelnetz KN von der Steuereinrichtung ST nach Beendigung der Wahlaufnahme die Spaltenadresse des Verbindungssatzes IVS und die Zeilenadresse des Wahlaufnahmesatzes WAS zusammen mit dem Befehl erhalten, den Koppelpunkt zu öffnen. Damit wird der nicht mehr benötigte Wahlaufnahmesatz WAS abgetrennt und anschließend in der Steuereinrichtung ST wieder als frei gekennzeichnet. Es ist selbstverständlich, daß nach Auswertung der empfangenen Rufnummer bei einer Internverbindung vor Aussendung der Einstellbefehle für das Koppelnetz KN eine Frei/Besetztprüfung des betreffenden Teilnehmeranschlusses stattgefunden hat.

Bei einer ankommenden Externverbindung wird die Belegung einer Leitungsschaltung AUe an die Steuereinrichtung ST gemeldet, die daraufhin zunächst die betreffende Leitungsschaltung in ihrem Arbeitsspeicher als besetzt kennzeichnet, einen freien Wahlaufnahmesatz WAS ermittelt und durch Übermittlung der Spaltenadresse der Leitungsschaltung AUe und der Zeilenadresse des Wahlaufnahmesatzes WAS zusammen mit einem Befehl zum Schließen des Koppelpunktes die Verbindung der beiden Einrichtungen miteinander innerhalb des Koppelnetzes KN veranlaßt. Der weitere Verbindungsaufbau erfolgt in der bereits beschriebenen Weise. Es ist noch darauf hinzuweisen, daß die Wahlaufnahme nicht unbedingt durch einen besonderen Wahlaufnahmesatz sondern auch bereits in den Teilnehmeranschlußschaltungen TS oder in den Leitungsschaltungen AUe erfolgen kann, wobei die weiteren Vorgänge ebenso ablaufen, wie bei der Wahlaufnahme durch den Wahlaufnahmesatz WAS.

Sobald das Einhängen eines Teilnehmers oder die Auslösung einer über eine Verbindungsletung AL verlaufenden Verbindung in einer der beteiligten, peripheren Einrichtungen erkannt wird, gelangt eine entsprechende Meldung an die Steuereinrichtung ST, die ihrerseits die betreffenden Einrichtungen in ihrem Arbeitsspeicher als frei kennzeichnet und die Auslösung der Verbindung innerhalb des Koppelnetzes KN veranlaßt, indem diese die entsprechenden Spalten- und Zeilenadressen zusammen mit dem Öffnungsbefehl der Koppelpunkte an das Koppelnetz KN übermittelt.

Bisher war davon ausgegangen worden, daß es sich bei dem Koppelnetz KN um ein solches handelt, welches aus räumlich durchschaltenden, aus bistabilen, matrixförmig angeordneten Koppelpunkten besteht. Bei der nun folgenden Beschreibung wird jedoch angenommen, daß das Koppelnetz KN die Verbindungen nach dem zeitmultiplex Verfahren durchschaltet. Dies kann, wie bereits eingangs erwähnt, mit Hilfe von Raum- oder Zeitkoppelstufen geschehen. Derartige Koppelfelder und ihre Wirkungsweise sind beispielsweise in der Druckschrift Fernmeldetechnik 20 (1980) Heft 6 auf den Seiten 215 bis 218 beschrieben. Zur Steuerung der Raum- oder Zeitkoppelstufen wird ein zyklisch auslesbarer Verbindungs- oder Haltespeicher benötigt, welcher ebensoviele Speicherplätze aufweist, wie Zeitlagen vorhanden sind. In der Regel sind pro Verbindung eine oder auch zwei Zeitlagen notwendig. Der zeitlagenindividuelle Speicherplatz des Haltespeichers enthält die Adresse bzw. Adressen der an einer Verbindung beteiligten peripheren Einrichtungen.

Bei einer Raumkoppelstufe wird mit Hilfe des Speicherinhalts des zeitlagenindividuellen Speicherplatzes, d.h. mit den der miteinander zu verbindenden peripheren Einrichtungen kennzeichnenden Adressen die den Einrichtungen zugeordneten Koppelpunkte gleichzeitig geschlossen und diese somit während der Dauer der Zeitlage miteinander verbunden. Eine Raumkoppelstufe einer zeitmutliplexen Vermittlungsanlage kann nun entweder als Koppelpunktmatrix oder kostengünstiger als gemeinsame Sammelschiene ausgebildet sein, an welcher alle peripheren Einrichtungen über individuelle Koppelpunkte anschließbar sind.

Bei einer Zeitkoppelstufe werden die nacheinander in einen Wortspeicher eingelesenen Sprachinformationen aufgrund der im Haltespeicher enthaltenen Empfangsadresse an den Empfänger weitergeleitet, d.h. es findet eine Zeitlagenumsetzung und damit eine Verzögerung während des Vermittlungsvorgangsstatt. Das Einlesen in den Wortspeicher, welcher ebensoviele Speicherplätze aufweist, wie Zeitlagen vorhanden sind, kann beispielsweise während eines ersten Zyklus geschehen, während das Auslesen im darauf folgenden Zyklus vorgenommen wird. Abschließend kann festgestellt werden, daß für beide Arten der zeitmultiplexen Verbindungsdurchschaltung ein Verbindungsspeicher benötigt wird, welcher ebensoviele Speicherplätze aufweist, wie Zeitlagen innerhalb eines Zyklus vorhanden sind, und in diesen Speicherplätzen die Adressen derjenigen peripheren Einrichtungen enthalten sind, die an einer Verbindung beteiligt sind.

Soll nun eine Steuereinrichtung ST, welche die Einstellinformationen für ein räumlich durchschaltendes aus bistabilen, matrixförmig angeordneten Koppelpunkten bestehendes Koppelnetz KN liefert, zur Steuerung eines zeitmultiplexen Koppelnetzes herangezogen werden, so wird eine Anpassungseinrichtung AP (Fig. 1) benötigt, welche zwischen die Steuereinrichtung ST und das Koppelnetz KN geschaltet wird und die von der Steuereinrichtung ST gelieferten Einstellinformationen entsprechend umwandelt, damit diese zur Steuerung eines zeitmultiplexen Koppelnetzes KN verwendet werden können.

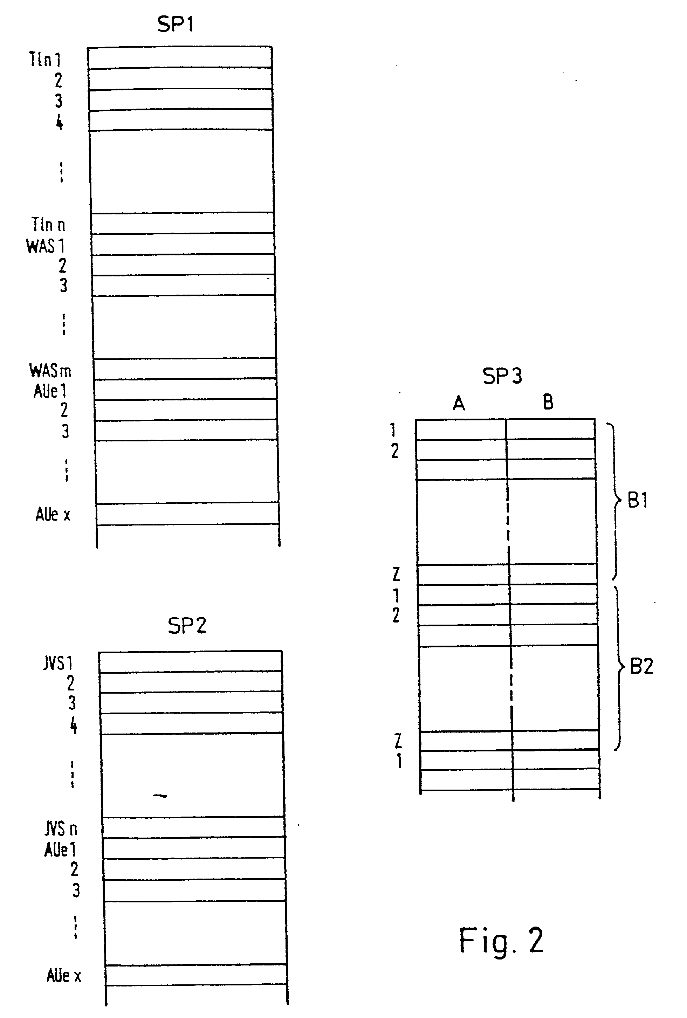

Neben einer entsprechenden nicht gezeigten Steuereinrichtung enthält die Anpassungseinrichtung AP drei Speicher SP1, SP2 und SP3, deren Konfiguration in Fig. 2 gezeigt wird. Der Speicher SP1 enthält eine Vielzahl von Speicherplätzen, welche den Teilnehmeranschlüssen Tln 1 bis Tln n, den Wahlaufnahmesätzen WAS1 bis WASm, den nicht gezeigten Vermittlungsplätzen PL und den Querverbindungen zugeordnet sind. Es handelt sich hierbei um alle diejenigen Einrichtungen, welche an den Zeilen des matrixförmigen, räumlich durchschaltenden Koppelfeldes angeschlossen waren. Neben diesen Speicherplätzen sind noch weitere Speicherplätze vorhanden, welche den einzelnen Leitungsschaltungen AUel bis AUex zugeordnet sind. Obwohl die Leitungsschaltungen AUe an den Spalten des räumlich durchschaltenden Koppelfeldes angeschlossen waren, erhalten diese dennoch Speicherplätze in demjenigen Speicher (SP1), welcher die Speicherplätze enthält, die den an ien Zeilen des Koppelfeldes angeschlossenen Einrichtungen entsprechen.

Der Speicher SP2 weist ebensoviele Speicherplätze auf, wie bei dem bisherigen räumlich durchschaltenden Koppelfeld Spalten vorhanden waren. So sind individuelle Speicherplätze für die Verbindungssätze IVS1 bis IVSy und die Leitungsschaltungen AUe1 bis AUex vorgesehen. Es fällt dabei auf, daß die Leitungsschaltungen sowohl in dem Speicher SP1 als auch in dem Speicher SP2 individuelle Speicherplätze aufweisen. Dies ist deshalb notwendig, da Bei einem zeitmultiplexen Koppelnetz die Leitungsschaltungen ebenso anschlußmäßig behandelt werden müssen, wie die übrigen peripheren Einrichtungen und nicht mehr ver-bindungsmäßig behandelt werden können, wie dies bei der Spaltenanschaltung bei dem räumlichen Koppelfeld der Fall war. Bei den Verbindungssätzen IVS erübrigt sich ein derartiges Vorgehen, da die Durchschaltung in dem zeitmultiplexen Koppelfeld ohnehin verbindungsbezogen erfolgt.

Die von der Steuereinrichtung ST übermittelten Einstellinformationen für das Koppelnetz KN werden in den betreffenden Speicherplätzen zusammen mit dem Ein/oder Ausschaltbefehl eingetragen. Wird beispielsweise angenommen, daß der Teilnehmeranschluß Tln1 mit dem Wahlaufnahmesatz WAS1 über den Verbindungssatz IVS1 miteinander verbunden sind, so enthält der Speicher SP1 in dem Speicherplatz Tln1 und im Speicherplatz WAS1 die Adresse des Verbindungssatzes IVS1, während in den Speicherplatz IVS1 des Speichers-SP2 die Adressen des Teilnehmeranschlusses Tln1 und des Wahlaufnahmesatzes WAS1 eingetragen sind. Der Speicherinhalt der beiden Speicher SP1 und SP2 stellt demnach ein Abbild des Arbeitsspeichers der Steuereinrichtung ST dar.

Sobald ein Vermittlungsvorgang in der Steuereinrichtung ST abgeschlossen ist, sendet diese ein Signal an die Anpassungseinrichtung AP, worauf in dieser ein Suchvorgang ausgelöst wird.

Durch Absuchen der Speicherinhalte der Speicher SP1 und SP2 werden die zu einer Verbindung gehörigen Adressen der betreffenden peripheren Einrichtungen ermittelt und in einem Bereich B des Speichers SP3 eingetragen. Sobald die Informationen bezüglich einer Verbindung in dem Speicher SP3 vollständig sind, werden sie an den Haltespeicher HSP übermittelt. In dem Fall, daß ebensoviele Zeitlagen wie Anschlüsse vorhanden sind, wird in dem Speicherplatz des Teilnehmeranschlusses Tln1 des Haltespeichers HSP die Adresse des Wahlaufnahmesatzes WS1 eingetragen, während im Speicherplatz des Wahlaufnahmesatzes WAS die Adresse des Teilnehmeranschlusses Tln1 eingetragen wird. Die Übermittlung der Information in dem Koppelnetz KN erfolgt derart, daß während des Zeitschlitzes des Teilnehmeranschlusses Tlnl die Information zum Wahlaufnähmesatz WAS1 und während des Zeitschlitzes des Wahlaufnahmesatzes WAS1 die Information zum Teilnehmeranschluß Tln1 übertragen wird.

Ist jedoch der Haltespeicher verbindungsindividuell orientiert, d.h. ist pro Verbindung nur eine Zeitlage vorhanden, wobei während der Zeitlage die gegenseitige Informationsübertragung zwischen zwei peripheren Einrichtungen erfolgen muß, so erfolgt die Ermittlung der betreffenden Zeitlage aus der Adresse des Verbindungssatzes IVS oder der Leitungsschaltung AUe.

Nach der Übergabe der Information aus dem Speicher SP3 wird der betreffende Speicherbereich B wieder gelöscht. Der zusätzlich mit den Adressen von der Steuereinrichtung ST übermittelte Befehl zum Ein- oder Ausschalten der Koppelpunkte wird zur Eintragung bzw. Löschung der betreffenden Informationen im Haltespeicher HSP benutzt.

Der Speicher SP3 weist Speicherbereiche B auf, mit jeweils einer Anzahl Speicherplätze 1 bis z. Die Zahl der Speicherplätze richtet sich nach der Anzahl der maximal an einer Verbindung beteiligten peripheren Einrichtungen.

Die in den Speichern SP1 und SP2 eingetragenen und noch nicht abgesuchten Adressen werden besonders gekennzeichnet, wobei das Kennzeichen zum Aufsuchen der an der Verbindung beteiligten Einrichtungen dient. Zur Abkürzung des Suchvorgangs ist es ebenso möglich, in einem oder auch zwei weiteren Speichern diejenigen Adressen der Speicher SP1 und SP2 einzutragen, welche abzusuchende Informationen enthalten.

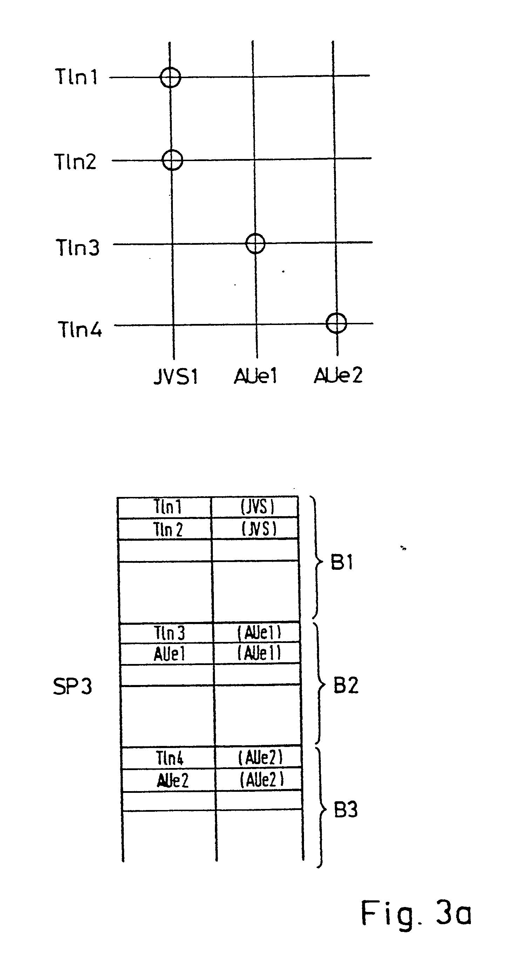

In Fig. 3a wird ein Ausschnitt aus einem matrixförmigen Koppelfeld gezeigt, zu dessen Steuerung die Einstellinformation von der Steuereinrichtung ST geliefert werden und der Inhalt des Speichers SP3, welcher die entsprechenden Informationen zur Eintragung in den Haltespeicher HSP enthält. Es wird davon ausgegangen, daß die Teilnehmeranschlüsse Tln1 und Tln2 über den Verbindungssatz IVS1 miteinander verbunden sind. Weiterhin bestehen Verbindungen zwischen dem Teilnehmeranschluß

Tln3 und der Leitungsschaltung AUe1 und zwischen d m Teilnehmeranschluß Tln4 und der Leitungsschaltung AUe2. Die als Ergebnis der Suchvorgänge im Speicher SP3,enthaltenen. Informationen werden anhand der Bereiche B1, B2 und B3 gezeigt, wobei darauf hinzuweisen ist, daß zwischen den eingetragenen Informationen und den jeweiligen Bereichen B1 bis B3 kein Zusammenhang besteht im Bereich B1 sind die Adressen der Teilnehmeramschlüsse Tln1 und Tln2 eingetragen. Bei einer anschluß-individuellen Zuordnung der Zeitschlitze kann ein Hinweis auf den Verbindungssatz entfallen, während bei einer verbindungsindividuellen Zuordnung der Zeitschlitze die Eintragung der Adresse des betreffenden Verbindungssetzes in dem Teil B des Speicherplatzes vorzunehmen ist. Im Bereich B2 sind die Adressen des Teilnehmeranschlusses Tln3 und der Leitungsschaltung AUe1 eingetragen. Bei einer verbindungsinaividuellen Zuordnung der Zeitschlitze muß in dem Bereich B des Speicherplatzes ebenfalls die Adresse der Leitungsschaltung AUe1 eingetragen werden. Der Bereich B3 enthält die entsprechenden Informationen für die Verbindung zwischen dem Teilnehmeranschluß Tln4 und der Leitungsschaltung AUe2.

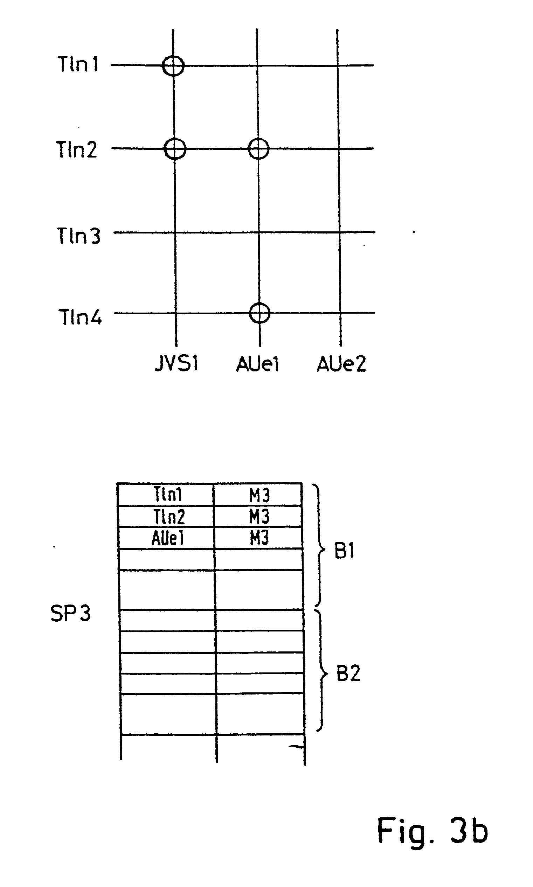

Anhand der Fig. 3b werden die Vorgänge bei einer Konferenzschaltung erläutert. Es wird davon ausgegangen, daß zwischen den Teilnehmeranschlüssen Tln1 und Tln2 eine Verbindung bestanden hat und eine Konferenzschaltung zwischen diesen beiden und einem dritten fernen Teilnehmeranachluß vorgenommen werden soll. Zusätzlich zu den beiden Adressen der Teilnehmeranschlüsse im ßpeicher SP2 im Speicherplatz des Verbindungsaatzes IVS1 wird in dem Speicherplatz der Leitungsschaltung AUe1 ebenfalls die Adresse des Teilnehmeranschlusses Tln2 eingetragen. Eine entsprechende Eintragung findet auch im Speicher SP1 statt. Aufgrund des Suchvorgangs wird nun ermittelt, daß zwischen den Teilnehmeranschlüssen Tln1 und Tln2 eine Verbindung mit der Leitungsschaltung AUe1 besteht. Die Adressen der betreffenden Einrichtungen werden in den Speicher SP3 als Ergebnis des Suchvorgangs eingetragen und dabei festgestellt, daß mehr als zwei Einrichtungen an einer Verbindung beteiligt sind. Bei zeitmultiplexen Koppelfeldern ist eine derartige Parallelschaltung aus technologiachen Gründen bekanntlich nicht möglich, vielmehr muß durch eine geeignete Mischeinrichtung eine Bearbeitung der Sprachsignale erfolgen. Hierzu ermittelt die Anpassungseinrichtung eine frei Mischeinrichtung M und trägt deren Adresse in dem Teil B der Speicherplätze des Bereichs B des Speichers SP3 ein. Im Haltespeicher wird in den Speicherplätzen der betreffenden peripheren Einrichtungen deren eigene Adresse zusammen mit der Adresse der Mischeinrichtung eingetragen, worauf die eigenen Sprachsignale der Mischeinrichtung übermittelt werden. Bezüglich der Arbeitsweise einer, derartigen Mischeinrichtung wird auf die DE-A 32 26 430 veröffentlicht am 19.1.1984 verwiesen, so daß im Rahmen dieser Beschreibung nicht näher auf die Vorgänge eingegangen wird.

**Patentansprüche**

1. Verfahren zum Steuern des Verbindungsaufbans und-abbaus in einer zeitmultiplexen -Fernmelde vermittlungsanlage insbesonderee in einer Fernsprechvermittlungsanlage mit einer Steuereinrichtung(ST), welche die Einstellinformationen für die Zeilen und Spalten eines räumlich durchschaltenden, aus bistabilen, matrixförmig angeordneten Koppelpunkten bestehenden Koppelnetzes (KN) erzeugt, an dessen Zeilen anschlußindividuelle und am dessen Spalten verbindungsindividuelle Einrichtungen angeschlossen sind, wobei das Zeitmultiplexkoppelnetz aus einer oder mehreren Sammelschienen oder Sprachspeicher gebildet wird, über welche die Verbindungen während der einzelnen Zeitschlitze, durch einen Haltespeicher (HSP) gesteuert, geschaltet werden, dadurch gekennzeichnet, daß durch eine zwischen die Steuereinrichtung (ST) und den Haltespeicher (HSP) geschaltete Anpassungseinrichtung (AP) eine entsprechende Umwandlung der von der Steuereinrichtung (ST) erzeugten Einstellinformationen erfolgt, indem die Spalteninformationen (Adressen) in einen ersten Speicher (SP1) mit zeilenindividuellen Speicherplätzen und die Zeileninformationen (Adressen) in einen zweiten Speicher (SP2) mit spaltenindividuellen Speicherplätzen derart eingetragen werden, daß in dem jeweiligen Speicher in den betreffenden Speicherplätzen die zu einer Verbindung gehörenden Informationen enthalten sind, daß sämtliche zu einer Verbindung gehörenden Zeileninformationen aus den Speichern (SP1, SP2) aufgrund eines von der Steuereinrichtung (ST) erzeugten Signals, welches den Ablauf eines Vermittlungsvorgangs kennzeichnet, ermittelt und in einem Speicherbereich (B) eines dritten Speichers (SP3) zusammen eingetragen werden, dessen Inhalt zur Aktualisierung des Speicherinhalts des Haltespeichers (HSP) dient.

2. Verfahren nach Anspruch 1, dadurch gekennzeichnet, daß die Übertragung des Inhalts eines Speicherbereichs des dritten Speichers (SP3) in den Haltespeicher (HSP) nach Beendigung des Absuchvorgangs aller Speicherplätze des ersten (SP1) und des zweiten (SP2) Speichers erfolgt.

3. Verfahren nach einem der Ansprüche 1 oder 2, dadurch gekennzeichnet, daß nach dem Übertragen des Speicherinhalts des dritten Speichers (SP3) derselbe gelöscht wird.

4. Verfahren nach einem der Ansprüche 1 bis 3, dadurch gekennzeichnet,

daß bei Vorhandensein von mehr als zwei Informationen in einem Speicherbereich (B) des dritten Speichers (SP3), beispielsweise bei Konferenzverbindungen, von der Anpassungseinrichtung (AP) eine freie digitale Mischeinrichtung (M) ermittelt und deren Adresse in den betreffenden Speicherbereich (B) eingetragen wird.

5. Verfahren nach einem der Ansprüche 1 bis 4, dadurch gekennzeichnet,

daß Leitungsübertragungen (AUe) neben einer Spalteninformation zusätzlich durch eine Zeileninformation in den Speichern (SP1, SP2) gekennzeichnet sind.

6. Verfahren nach einem der Ansprüche 1 bis 5, dadurch gekennzeichnet,

daß die in dem ersten (SP1) und dem zweiten (SP2) Speicher enthaltenen Informationen bei der Eintragung mit einem Kennzeichen versehen werden, welches nach Beendigung des Absuchvorgangs wieder gelöscht wird.

7. Verfahren nach einem der Ansprüche 1 bis 6, dadurch gekennzeichnet,

daß die Adressen derjenigen Speicherplätze des ersten (SP1) und/oder des zweiten Speichers (SP2), in welche Informationen eingetragen werden, in einen oder zwei weiteren Speichern eingeschrieben werden, daß der Suchvorgang aufgrund dieser Adressen durchgeführt wird, an dessen Ende eine Löschung der Adressen erfolgt.

**Claims**

1. Method of controlling the set-up and release of call connexion paths in a TDM telecommunication especially in a telephone exchange having a control unit (ST) which generates the control information for the rows and columns of a spatial switching network (KN) consisting of bistable in form ofamatrix arranged switching elements at its rows terminal particular and at its columns junctor particular units are connected, whereby the TDM switching network consists of one or more bus systems or speech storages for switching connexions during the individual time slots controlled by a holding memory characterized in, that by an adapter unit (AP) connected between the control unit (ST) and the holding memory (HSF) an appropriate conversion of the control information generated by the control unit (ST) is performed while the column information (addresses) is storea in a first memory (SP1) having row particular storing places and the row information (addresses) are stored in a second memory (SP2) having column particular storing places such, that in the appropriate memory in the concerning storage places the information belonging to a connexion is contained, that the complete row information belonging to a connexion is identified in the memories (SP1, SP2) caused by a signal generated by the control unit (ST), which marks the flow of a switching procedure, said information is stored together in a storage area (B) of a third memory (SP3), whereby the content of said memory is used for the actualisation of the content of the holding memory (HSP).

2. Method according to claim characterized in, that the transfer of the content of the storage area of the third memory (SP3) into the holding memory (HSP) is performed after the termination of the scanning procedure of all storage places of the first (SP1) and the second (SP2) memory.

3. Method according to claim 1 or 2, characterized in, that after the transfer of the content of the third memory said content is cleared.

4. Method according to claims 1 to 3, characterized in, that at the presence of more than two information in a storage area (B) of the third memory (SP3), for example at conference connexions,an idle digital mixing unit (M) is indentified and its address is stored in the concerning storage area (B).

5. Method according to claims 1 to 4, characterized in, that the junctor units (A4e) are not only marked by a column information but also by an additional row information in the memories (SP1,SP2).

6. Method according to claims 1 to 5, characterized in, that the information stored in the first (SP1) and the second memory (SP2) are marked with an indication, which is cleared again after the termination of the scanning procedure.

7. Method according to one of claims 1 to 6 characterized in, that the addresses of the storage places of the first (SP1) and/or the second memory (SP2) in which information are stored, are written into an additional memory and that the scanning procedure is performed according to this addresses, whereby the addresses are cleared at the end of said procedure.

**Revendications**

1. Procédé pour commander l'établissement et la libération des chemins de connexion dans une installation de télécommunication temporelle, en particulier dans un central téléphonique temporel, comprenant un dispositif de commande (ST) qui produit les informations de positionnement pour les lignes et les colonnes d'un réseau de connexion spatial (KN) composé de points de connexion bistables disposés en forme de matrice, aux lignes duquel sont reliés des dispositifs associés individuellement aux raccordements et aux colonnes duquel sont reliés des dispositifs associés individuellement aux chemins de connexion, le réseau de connexion temporel étant formé d'une ou plusieurs barres omnibus ou mémoires vocales, par lesquelles les chemins sont connectés pendant les différents intervalles de temps sous la commande d'une mémoire de maintien (HSP), caractérisé en ce qu'un dispositif d'adaptation (AP) monté entre le dispositif de commande (ST) et la mémoire de maintien (HSP) effectue une conversion adéquate des informations de positionnement produites par le dispositif de commande (ST), du fait que les informations (adresses) de colonne sont inscrites dans une première mémoire (SP1) avec des emplacements de mémoire associés individuellement aux lignes et les informations (adresses) de ligne sont inscrites dans une deuxieme memoire (SP2) avec des emplacements de mémoire associés individuellement aux colonnes, de manière que chaque mémoire contienne aux emplacements de mémoire concernés les informations relatives à un chemin et que toutes les informations de ligne relatives à un chemin sont recherchées dans les mémoires (SP1, SP2) sous l'effet d'un signal produit par le dispositif de commande (ST) et caractérisant le déroulement d'une operation de commutation et sont ensemble inscrites dans une zone de mémoire (B) d'une troisieme mémoire (SP3) dont le contenu sert à actualiser le contenu de la mémoire de maintien (HSP).

2. Procédé selon la revendication 1, caractérisé en ce que le transfert du contenu d'une zone de mémoire de la troisième mémoire (SP3) dans la mémoire de maintien (HSP) s'effectue après l'opération d'exploration de tous les emplacements de mémoire de la première (SP1) et de la deuxième mémoire (SP2).

3. Procédé selon la revendication 1 ou 2, caractérisé en ce que, après le transfert du contenu de la troisième mémoire (SP3), celle-ci est effacée.

4. Procédé selon une des revendications 1 à 3, caractérisé en ce que, en cas de présence de plus de deux informations dans une zone de mémoire (B) de la troisième mémoire (SP3), par exemple lors de communications collectives (de conférence), le dispositif d'adaptation (AP) cherche un dispositif mélangeur numérique (M) libre et inscrit son adresse dans la zone de mémoire (B) concernée.

5. Procédé selon une des revendications 1 à 4, caractérisé en ce que des équipements de translation de lignes (AUe) sont caractérisés, outre par une information de colonne, par une information de ligne dans les mémoires (SP1, SP2).

6. Procédé selon une des revendications 1 a 5, caractérisé en ce que les informations contenues dans la première (SP1) et la deuxième mémoire (SP2) lors d'être inscrites sont pourvues d'une marque qui, après l'operation d'exploration, est effacée.

7. Procédé selon une des revendications 1 a 6, caractérisé en ce que les adresses de ces emplacements de mémoire de la première)SP1) et/ou de la deuxième mémoire (SP2) où des informations sont inscrites, sont enregistrées dans une ou deux autres mémoires, et que l'opération d'exploration, à la fin de laquelle un effacement des adresses s'effectue, est executée sous l'effet de ces adresses.

Fig. 1

Fig. 2

Tln 1 ⊕

Tln 2 ⊕

Tln 3 ⊕

Tln 4 ⊕

JVS1　AUe1　AUe2

| Tln 1 | (JVS) | |
|-------|-------|---|
| Tln 2 | (JVS) | |
|       |       | } B1 |
|       |       | |
| Tln 3 | (AUe1) | |
| AUe1  | (AUe1) | |
|       |       | } B2 |
|       |       | |
| Tln 4 | (AUe2) | |
| AUe2  | (AUe2) | |
|       |       | } B3 |

SP3

Fig. 3a

Fig. 3b